# EUROPEAN PATENT APPLICATION

(11) **EP 3 651 294 A1**
(43) Date of publication of application: **13.05.2020**
(21) Application number: 19464016.5
(22) Date of filing: 28.10.2019
(51) Int. Cl.: H02G 13/00

(54) **MULTILAYER EARTHING ELECTRODE (RODS) AND MANUFACTURING PROCESS THEREFORE**

(30) Priority: 07.11.2018 RO 201800876
(71) Applicant: Betak SA, 420063 Bistrita Nasaud (RO)
(72) Inventor: Bulea, Caius Casiu, 420033 Bistrita (RO)
(74) Representative: Isoc, Dorin

(57) **Abstract**

The multilayer earthing electrode (rod) and process for manufacturing it is a component of the electrical circuits intended to form the overcurrent protection belt resulting from electrical discharges and has a structure that allows it to be obtained in specialized production.

The industrially produced earthing electrode is made of semi-fabricated steel (1), copper (13) or aluminium as a square pipe in which other square pipes are introduced, with smaller sizes of zinc or copper steel, strips or bars which are then deformed, for example by pressing actions perpendicular to the sides of the square (**F1, F2, F3, F4**), in the final form of a straight cross with equal arms over the entire length of the electrode with walls alternating as a material or as a layer of protection.

## Description

The invention relates to the manufacturing process of the body of a multilayer earth electrode (rods) intended for use in the industrial manufacture of the mechanical components of the protective earth socket against electrical overcurrents provided by electrical discharges (lightning).

In order to manufacture the electrodes (rods), we know semi-manufactured products that have different profiles, for example in the form of a bar, pipe, cross, etc.

The way, in which the profiles of the body of the earthing electrodes (rods) are to be achieved, assumes several essential objectives.

First, the body profiles of the earthing electrodes (rods) aim to provide an exposure surface as significant as possible to ensure a sufficient surface current flow to dissipate the overcurrents and accidental discharge voltages as a result of lightning.

Secondly, an optimum body profile of the earthing electrodes is intended to provide mechanical strength and sufficient penetration qualities for different soil categories.

Third, a feature that ensures proper functioning in the whole of the electrical phenomena is the preservation of the properties of good conductor of the electrode body, regardless of the environmental conditions and the installation age, that is to have an electrical resistivity as low as possible corrosion resistance as long as possible and of a longer service life.

From the point of view of the conditions of achievement, it is necessary to ensure optimum productivity for the production of large series productions. It should be noted that, from a dimensional point of view, the earthing electrodes are presented as products with normalized dimensions, in well specified categories, to which all electrical calculations are reduced.

The professional standards insist both on the dimensions of the earthing electrodes and on the state of the surface, which must ensure a high resistance to corrosion, respectively a longer service life ([1], [2], [3]).

The disadvantages of the existing solutions are that their manufacturing involves a large number of inhomogeneous preparation operations that increase the execution times and, in addition, the electrical features of the earthing electrodes (rods) are not ensured and guaranteed in time.

The problem solved by the invention is the obtaining of a earthing electrode (rods) by a technological process with a minimum number of preparation operations and with higher electrical and corrosion protection properties, respectively a significant corrosion resistance.

The earthing electrode according to the invention removes the above mentioned disadvantages as it is made of a galvanized steel, copper or aluminium blank as a square pipe in which other square pipes are introduced, with smaller sizes of zinc or copper steel, strips or bars which are then deformed, for example by pressing actions perpendicular to the sides of the square, in the final form of a straight cross with equal arms along the entire length of the electrode with walls alternating as a material or as a protective layer.

The advantages of the invention are that the earthing electrode (rod) is obtained from a semi-finished final single component, that it has superior electrical performance, the number of technological operations for manufacturing is lower than in the known cases and the earthing electrode (rod) has a high corrosion resistance and a significant lifetime.

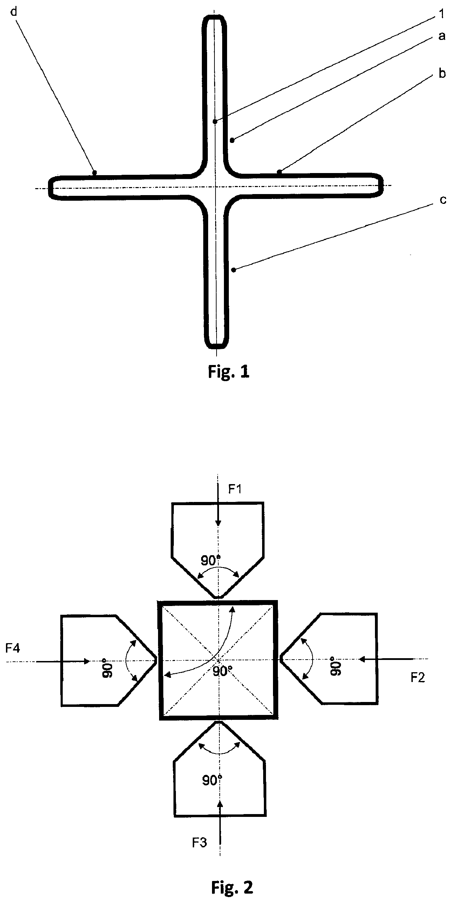

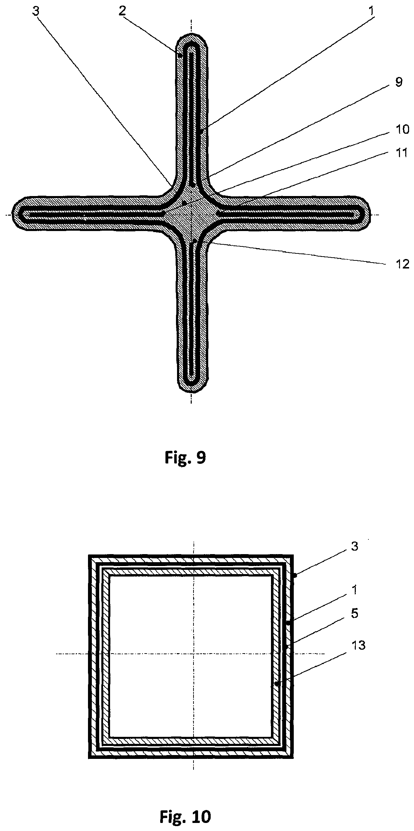

The following is an example of embodiment of the invention and in connection with **Fig. 1** **...** **Fig. 10** which represents:
**Fig. 1** - the profile of the earthing electrode in cross-section;
**Fig. 2** - the initial state of the rectangular pipe type blank and the positions of the prisms (jaws) of deformation by pressing.
**Fig. 3** - intermediate state of the rectangular pipe type blank and of the positions of the prisms (jaws) of deformation by pressing.
**Fig. 4** - final state of the rectangular pipe semi-finished product and of the positions of the prisms (jaws) of deformation by pressing.
**Fig. 5** - side view of the rectangular pipe type semi-finished product and of the positions of the prisms (jaws) of deformation by pressing.
**Fig. 6** - cross section of the multilayer electrode with steel walls and successive layers of Cu and Zn.
**Fig. 7** - cross section of the electrode with the layers of restoration of the coatings subjected to cracking by mechanical action.
**Fig. 8** - a cross section of the electrode comprising a cylindrical copper bar disposed in the geometric axis of the profile, along the length of the electrode.
**Fig. 9** - cross section of the electrode with copper strips inserted into the profile wings.
**Fig. 10** - cross section of the electrode with the assembly of profiles and parts, which are then deformed by pressing.

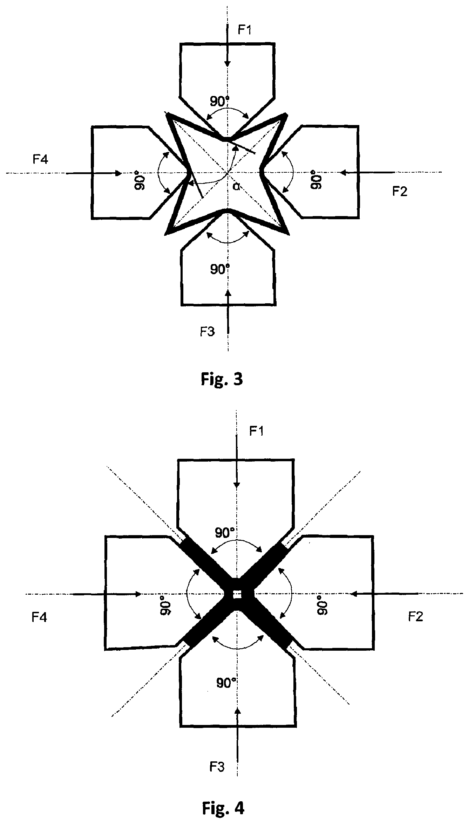

The earthing electrode **1** according to the invention is made, as in **Fig. 1**, from a zinc-coated steel semi-fabricated, be it a square pipe, which deforms, as a straight cross with equal arms **a**, **b**, **c**, **d** and hollow inside the resulting geometric profile, along the entire length of the electrode as in **Fig. 4**.

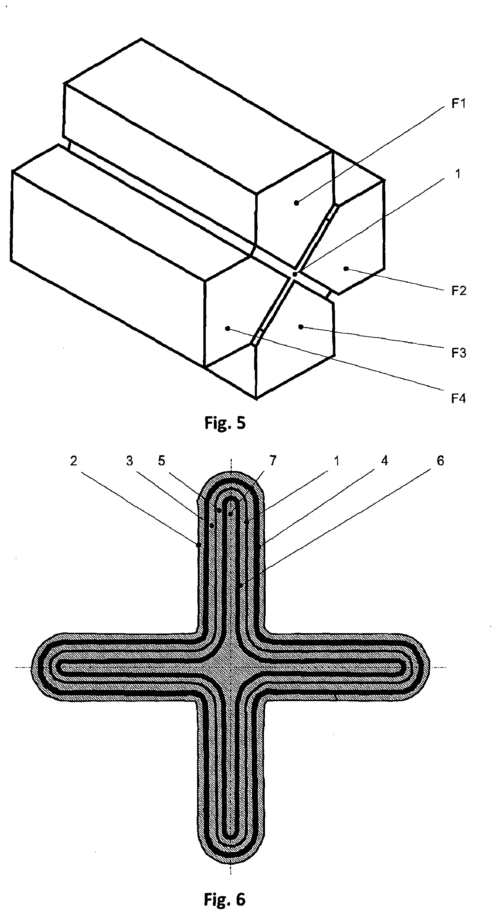

Another embodiment of the invention is also provided in **Fig. 6** which shows the transverse profile of the multilayer electrode consisting of steel walls and successive layers of Cu and Zn.

The earthing electrode is made of a rectangular pipe **1** made of zinc-coated steel with the outer layer of zinc **3**, respectively the inner **5**, over which are deposited some copper layers **4** outer, respectively **6** inside, by a known method, for example in a solution of sodium and potassium tartrate and formaldehyde, these technological processes being executed before the deformation of the pipe or the pipe assembly in the final cross shape. The copper layers, **4** respectively **6**, of the electrode with the resulting profile are covered with two other zinc layers, one outer, **2** and one inner one, **7** respectively.

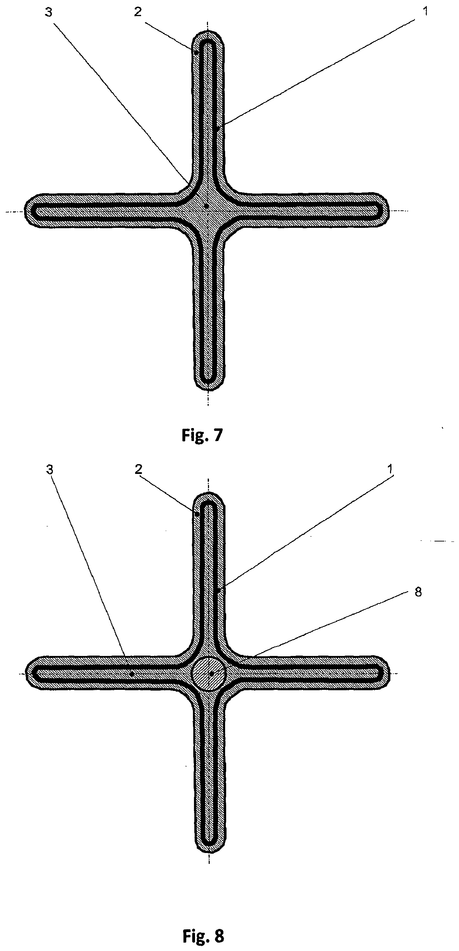

A further embodiment of the invention is provided, in connection with **Fig. 8**, which shows the cross-sectional profile of the electrode comprising a cylindrical copper bar, disposed in the geometric axis of the profile, along the electrode length.

To make the electrode profile, one uses zinc-plated pipe, **1** or zinc-plated steel tape on the both sides, with zinc layers, an outer layer **2**, respectively an inner layer, **3**.

Prior to the complete closure of the four-star star-shaped polygonal final shape, a copper bar **8** having a cross section equal to the hollow section remaining after the mechanical deformation process is inserted on the profile geometric axis along the electrode.

This section depends on the thickness of the material to be deformed, where the minimum bending radius is equal to the thickness of the bending material. So, is achieved by plastic deformation, a steel profile in the form of a cross, zinc-coated inside and out and having a copper bar in the centre.

Another embodiment of the invention in connection with **Fig. 9** showing the transverse profile of the electrode with copper strips inserted into the profile wings.

Inside the profile of the steel rectangular semi-fabricated **1**, deformed and comprised between the zinc layers of corrosion protection interior 2, respectively interior **3**, in the wings of the star profile, are introduced some longitudinal strips **9**, **10**, **11**, **12** of copper or aluminium, after which the process of continuous pressing until the profile is completely closed.

A further embodiment of the invention is given, in connection with **Fig. 10**, which shows in the cross-section the assembly of profiles and parts which are then deformed by pressing.

In this example the steel, zinc and copper layers are obtained by inserting a rectangular copper pipe **13**, inside the rectangular steel pipe with walls **1** and the zinc layers **3**, respectively **5**, steel pipe which has some suitable sizes such that the pipe of copper, **13** to enter inside the galvanized steel pipe, with small movement, before deforming them.

It results, by deforming the assembly from the four sides, a metallic profile in the form of a cross with four sides, consisting of several layers superimposed, from the outside to the inside: zinc / steel / zinc / copper.

The process of making the earthing electrode according to the invention takes over the blank, for example, between prismatic jaws **F1**, **F2**, **F3**, **F4** parallel to its symmetry axis, along the entire length of the future electrode and perpendicular to its faces, as in **Fig. 5**.

By continuous pressing, the four prismatic jaws located diametrically opposite pass through a generic deformation phase as in **Fig. 2** when the initial angle of 90° is reduced in steps as an angle **α**. This angle **α**, as in **Fig. 3**, tends to zero when the pressing action ceases and the product is thrown from the deforming jaws.

The process is similar applied also in cases where the semi-finished product is a rectangular pipe or a round pipe, the result being the same and if the deformation is done starting from a semi-finished product in the form of tape which is deformed by rolling.

For situations where the semi-finished product is made of steel pipe, thermally galvanized or thermally galvanized steel strip and there is deformation in the idea of obtaining the four-arm star profile, the existing zinc layers are cracked both inside and outside.

The anti-corrosive protection or the zinc coating is restored by immersing the electrode of activation in a flow bath for thermal zinc-zinc chloride and ammonium chloride, then immersing it in the molten zinc bath and obtaining a coating on the outside of uniform and continuous zinc, **2** and within the electrode profile, a homogeneous zinc layer, **3** (**Fig. 7**).

### Bibliographical references

[1]DIN. *Electroplated coatings* - *Zinc coatings on iron or steel* - *Terms, testing and corrosion resistance.* DIN 50961:2012-04.
[2]DIN. *Galvanische Überzüge* - *Chromatierte Zinklegierungsüberzüge auf Eisenwerkstoffen.* DIN 50962:2013-02
[3]SR. Electroplated coatings of zinc with supplementary treatments on iron or steel (ISO 2081:2018).

## Claims

1. Multilayer earthing electrode (rods) intended for inclusion in electrical circuits for protection of high power electrical phenomena **wherein** it is made of a semi-fabricated one or a square pipe, which deforms by actions perpendicular to the sides of the square, as a straight cross with equal arms (**a**, **b**, **c**, respectively **d**) and hollow inside the resulting geometric profile, along the entire length of the electrode.

2. The earthing electrode (rods) as in claim 1 **wherein** it is made of a rectangular pipe (**1**) made of zinc-coated steel with an outer layer of zinc (**3**) respectively, inner (**5**) over which two copper layers are deposited, an outer one, respectively an inner one (**4**, **6** respectively), by a known method, for example by chemical deposition in a solution based on copper sulphate, sodium tartrate and potassium tartrate and formaldehyde, finally the layers of copper, are coated with two other zinc layers, one outer and one inner respectively (**2**, respectively **7**).

3. The electrode (rod) as in claim 1, **wherein** it is made of a zinc-coated pipe (**1**) or zinc-coated steel tape on both sides, with zinc layers, an outer layer, an inner layer (**2** and **3** respectively) so that before the complete closure of the final four-arm star-shaped polygonal shape, on the geometric axis of the profile, along the length of the electrode, a copper or aluminium bar (**8**) with a section approximately equal to the section of the hollow that remains after the completion of the process is inserted mechanical deformation.

4. The electrode (rod) as shown in claim 3 **wherein** the inner of metal profile, before its complete deformation, between the corrosion protection layers inside (**2** and **3** respectively) in each or only in some of the wings of the star profile, one insert some longitudinal strips (**9**, **10**, **11**, **12**) of copper or aluminium, after which the pressing process continues until the profile is completely closed.

5. Process for industrially manufacturing the earthing electrodes (rods) **wherein** the semi-fabricated, square or round pipe involves, for example, prismatic jaws (**F1**, **F2**, **F3**, **F4**) parallel to its axis of symmetry, along the entire length of the future electrode and perpendicular to its faces, so that the jaws diametrically opposed, pass through phases when the initial angle of 90° is reduced in steps to a sharp angle (**α**) that tends to zero when the pressing action ceases and the product is thrown from the jaws of deformation prisms.

6. Process for industrially manufacturing the earthing electrodes (rods) as in claim 5 **wherein** inside the semi-fabricated rectangular or round steel pipe type (**1**), it is introduced before the deformation process, another rectangular or round pipe of copper or aluminium (**13**) having the suitable sizes so that the copper or aluminium pipe enters with movement the inside of the steel pipe (**1**) with zinc layers on inside, respectively on the outside (**3**, respectively **5**), after which the deformation process is finalized by obtaining an assembly in a star-shaped polygonal, with four arms.

7. Process for industrially manufacturing the earthing electrodes (rods) as in claim 5, **wherein,** inside the rectangular or round pipe or copper or aluminium pipe type (**13**), is introduced, before the deformation process, another rectangular or round steel pipe (**1**) having the appropriate sizes so that the steel pipe with the zinc-coating layers (**3** and **5** respectively) enters the copper or aluminium pipe, after which the deformation process is completed by obtaining an assembly in a star-shaped polygonal shape, with four arms.

8. Process for industrially manufacturing the earthing electrodes (rods) according to claim 5, **wherein**, as a result of the mechanical deformation action, when the semi-fabricated one is the rectangular steel pipe or the thermally galvanized steel rectangular pipe (1), and when the existing zinc layers are cracked inside both and externally, anti-corrosion protection or zinc coating is made by immersing the electrode for activation, in a zinc chloride and ammonium chloride bath for thermal galvanizing, then immersing it in the molten zinc bath and obtaining, externally a uniform and continuous zinc layer and inside the electrode profile, a homogeneous zinc layer.
